# EUROPÄISCHE PATENTSCHRIFT

(11) **EP 2 731 823 B1**
(45) Veröffentlichungstag und Bekanntmachung des Hinweises auf die Patenterteilung: **10.10.2018**
(21) Anmeldenummer: 12729865.1
(22) Anmeldetag: 14.06.2012
(51) Int. Cl.: B60N 2/90

(54) **SITZANLAGE MIT EINER VARIABLEN SITZBANK**
SEAT SYSTEM WITH A VARIABLE SEAT BENCH
DISPOSITIF DE SIÈGE COMPORTANT UNE BANQUETTE VARIABLE

(30) Priorität: 13.07.2011 DE 102011107226
(43) Veröffentlichungstag der Anmeldung: 21.05.2014
(73) Patentinhaber: Volkswagen Aktiengesellschaft, 38440 Wolfsburg (DE)
(72) Erfinder: BREYVOGEL, Jörg, 38165 Lehre (DE); FEUSTEL, Daniel, 38518 Gifhorn (DE); LINKE, Olaf, 38154 Königslutter (DE); WOYNOWSKI, Tobias, 30165 Hannover (DE)
(86) Internationale Anmeldenummer: PCT/EP2012/002507
(87) Internationale Veröffentlichungsnummer: WO 2013/007335

(56) Entgegenhaltungen:
- WO-A1-99/03377
- WO-A1-2007/033708
- US-A- 5 286 084

## Beschreibung

Die Erfindung betrifft eine Sitzanlage für ein Fahrzeug, insbesondere für ein Großraum-Fahrzeug mit mehreren Sitzreihen, mit einer ungeteilten oder geteilten Sitzbank in mindestens einer der Sitzreihen, deren Sitzuntergestell/e zwischen seitlich der Sitzbank liegenden, den Bauraum für das/die Sitzuntergestell/e begrenzenden Hindernissen liegt, wobei die Sitzbank einen oberhalb des Hindernisses liegenden Überstand bildet.

Aus dem Stand der Technik sind eine Reihe von Druckschriften bekannt, die sich mit der variablen Gestaltung von Sitzanordnungen in Großraum-Fahrzeugen, so genannten Großraum-Vans beschäftigen.

In der Reihenfolge ihrer Veröffentlichung sind folgende Druckschriften DE 29 38 952 A1; DE 38 37 234 A1; US 5,611,589 A; JP 2000264109 A; EP 1 344 677 A2; US 2005/0253433 A1; US 2006/0076795 A1; DE 699 29 726 T2; DE 10 2006 059 722 A1; DE 10 2006 058 476 A1; DE 10 2007 049 164 A1 und DE 20 2008 000 221 U1 bekannt geworden, die sich mit der variablen Gestaltung von Sitzanlagen in Großraum-Fahrzeugen beschäftigen.

Ferner wird als Stand der Technik auf die Druckschriften WO 99/03377 A1, US 5 286 084 A und WO 2007/033708 A1 verwiesen. Aus den Druckschriften sind bereits gattungsgemäße Fahrzeugsitze beziehungsweise Sitzbänke bekannt, die eine Sitzteilseitenwange oder eine Rückenlehnenseitenwange aufweisen, die einen Überstand über ein seitlich des Fahrzeugsitzes oder der Sitzbank angeordnetes Hindernis bilden.

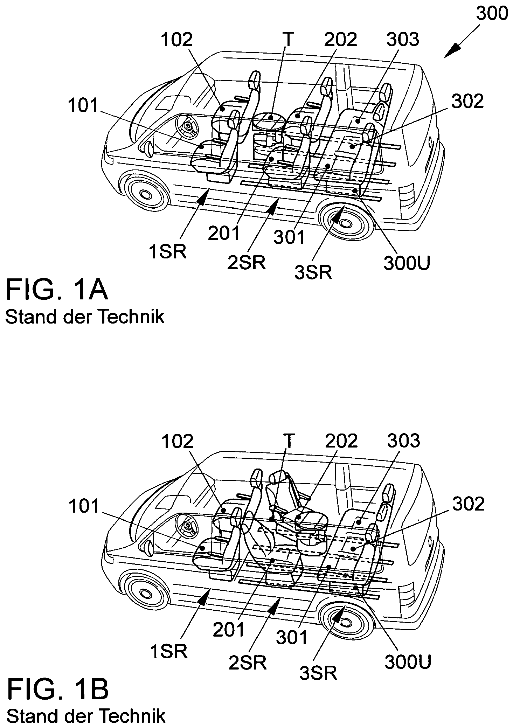

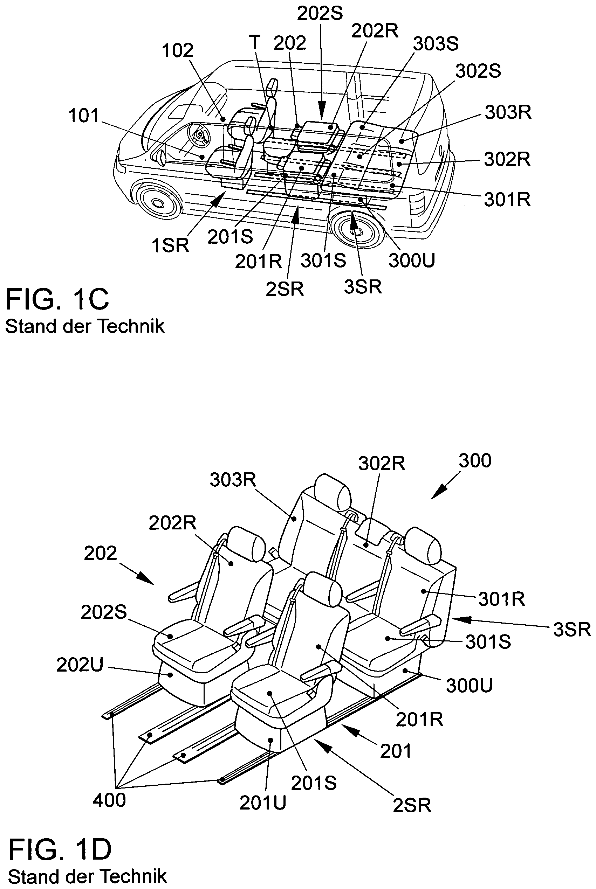

Zur Verdeutlichung des Standes der Technik wird beispielhaft anhand der Figuren 1A, 1B, 1C, 1D ein Großraum-Fahrzeug beschrieben, welches eine variable Sitzanlage aufweist.

Die Figur 1A zeigt das Großraum-Fahrzeug, welches drei Sitzreihen 1SR, 2SR, 3SR aufweist, wobei sich die Einzelsitze 101, 102, 201, 202 beziehungsweise eine dreigeteilte Sitzbank 300 in einer Grundposition befinden. In der ersten Sitzreihe 1SR sind Einzelsitze, ein Fahrersitz 101 und ein Beifahrersitz 102 angeordnet. In der zweiten Sitzreihe 2SR sind weitere zwei Einzelsitze 201, 202 angeordnet, zwischen denen beziehungsweise vor denen ein umpositionierbarer und variabel umbaubarer Tisch T angeordnet ist. In der dritten Sitzreihe 3SR ist eine Sitzbank 300 ausgeführt, die durch ihre Polsterung dreiteilig ist. Die Sitzbank 300 weist ein gemeinsames Sitzbankuntergestell 300U auf und ist sitzteilseitig und rückenlehnenseitig als durchgehendes Sitzbankteil 301/302/303 konzipiert. Einzelne Sitzbankteile 301, 302, 303 sind nicht vorhanden. Die Dreiteilung der Sitzbank 300 entsteht für den Betrachter durch die erwähnte dreiteilige Polsterung nur optisch.

Die in Figur 1A in ihrer Grundposition dargestellte Sitzanlage kann, wie Figur 1B zeigt, zu einer Konferenzstellung umgebaut werden, da die Einzelsitze 201, 202 der zweiten Sitzreihe 2SR als Drehsitze ausgeführt sind, wodurch die Einzelsitze 201, 202 nach hinten geschwenkt werden können, sodass die Blickrichtung eines Aufsitzenden nach hinten weist. Der Tisch T kann dabei im Fahrzeug zwischen den Einzelsitzen 201, 202 nach hinten verschoben werden, sodass der Tisch T von der zweiten Sitzreihe 2SR und der dritten Sitzreihe 3SR nutzbar ist.

Ausgehend von der Figur 1A kann die Sitzanlage von der Grundposition ausgehend ferner in eine in Figur 1C gezeigte Liegestellung umgebaut werden. Die beiden Einzelsitze 201, 202 der zweiten Sitzreihe 2SR werden, nachdem der Tisch T zusammengeklappt und nach vorne verschoben worden ist, in Liegestellung gebracht, indem die Rückenlehnen 201R, 202R der Einzelsitze 201, 202 auf die jeweiligen Sitzteile 201S, 202S geklappt werden. Außerdem wird die Sitzbank 300 der dritten Sitzreihe 3SR umgeklappt, indem die einteilige Rückenlehne 301R/ 302R/303R nach hinten verschwenkt wird, sodass die Rückseiten der Rückenlehnen 201R, 202R der Einzelsitze 201, 202 der zweiten Sitzreihe 2SR und die Vorderseite des einteiligen Sitzteiles 301S/302S/303S der Sitzbank 300 und die Vorderseite der einteiligen Rückenlehne 301R/302R/303R eine ebene Liegestatt bilden.

Um einen nahezu spaltfreien Übergang zwischen der zweiten und der dritten Sitzreihe 2SR, 3SR für die Liegestatt zu gewährleisten, werden die Einzelsitze 201, 202 der zweiten Sitzreihe 2SR nach hinten und anschließend die Sitzbank 300 nach vorne geschoben, bis die Stirnseite des einteiligen Sitzteiles 301S/302S/303S der Sitzbank 300 der dritten Sitzreihe 3SR an den Unterseiten der Rückenlehnen 201R, 202R der Einzelsitze 201, 202 der zweiten Sitzreihe 2SR zur Anlage kommt.

In Figur 1D ist die zweite und dritte Sitzreihe 2SR, 3SR des Innenraumes des bekannten Großraum-Fahrzeuges separat dargestellt, wobei der Tisch T nicht dargestellt ist. Die Längsverschiebung der Einzelsitze 201, 202 der zweiten Sitzreihe 2SR und der Sitzbank 300 der dritten Sitzreihe 3SR sowie des Tisches T erfolgt über ein im Bodenaufbau installiertes Schienensystem, welches aus sechs in Fahrzeuglängsrichtung des Fahrzeuges im Bodenaufbau angeordneten Schienen 400 aufgebaut ist.

Wie Figur 1D zeigt, weisen die Einzelsitze 201, 202 der zweiten Sitzreihe 2SR jeweils ein eigenes Sitzuntergestell 201U, 202U und die Sitzbank 300 der dritten Sitzreihe 3SR ein gemeinsames Sitzuntergestell 300 U auf.

Insbesondere in der dritten Sitzreihe 3SR besteht das Problem, dass die nach innen in den Fahrgastraum hinein stehenden Radhäuser 500 eine Beschränkung für die Variabilität der Verstellmöglichkeiten der Sitzbank 300 darstellen. Um in der Grundposition der Sitzanlage die gesamte Breite des Fahrzeuges für die dreiteilig gepolsterte Sitzbank 300 in der dritten Sitzreihe 3SR zu nutzen, wird im Stand der Technik so vorgegangen, dass das Sitzbankuntergestell 300U in beiden seitlichen Bereichen wegen der nach innen stehenden Radhäuser 500 nach innen eingerückt ausgebildet ist, sodass das Sitzbankuntergestell 300U der Sitzbank 300 der dritten Sitzreihe 3SR zwischen die beiden Radhäuser 500 passt.

Das darüberliegende einteilige Sitzteil 301S/302S/303S und die Rückenlehne 301R/302R/ 303R der Sitzbank 300 werden hingegen über die gesamte Breite des Fahrzeuges ausgebildet, sodass die seitlichen Bereiche des Sitzteiles 301S/302S/303S beziehungsweise der Rückenlehne 301R/302R/303R gegenüber dem Sitzbankuntergestell 300U einen Überstand bilden, der in der Grundposition der Sitzanlage oberhalb der Radhäuser 500 liegt. Durch den Überstand sind die Radhäuser 500, insbesondere für nach unten gerichtete Bewegungen des einteiligen Sitzteiles 301S/302S/303S dritten Sitzreihe 3SR ein Hindernis, welches die Umgestaltung einer solchen Sitzbank 300, die nur ein Sitzbankuntergestell 300U für die gesamte Sitzbank aufweist, stark einschränkt.

Ausgehend von dieser Problematik liegt der Erfindung die Aufgabe zugrunde, eine Sitzanlage, insbesondere für ein Großraum-Fahrzeug zu schaffen, deren dritte Sitzreihe variabler umgestaltbar und umpositionierbar ist.

Die Erfindung geht gemäß Oberbegriff des Patentanspruchs 1 von einer Sitzanlage für ein Fahrzeug, insbesondere für ein Großraum-Fahrzeug aus, die mehrere Sitzreihen aufweist. Mindestens eine Sitzreihe ist eine ungeteilte oder geteilte Sitzbank, deren Sitzbankuntergestell oder deren Sitzuntergestelle von mindestens einem seitlich der Sitzbank liegenden, den Bauraum für das Sitzbankuntergestell oder die Sitzuntergestelle begrenzenden Hindernis eingeengt wird/werden, weshalb die Sitzbank mindestens einen oberhalb des Hindernisses liegenden Überstand bildet.

Ein solches Hindernis stellt in der Praxis regelmäßig, insbesondere bei Großraum-Fahrzeugen, die in den Fahrgastraum des Fahrzeuges hinein stehenden Radhäuser einer Karosserie des Fahrzeuges dar.

Zur Lösung der Aufgabe, ist in Verbindung mit den Merkmalen des Oberbegriffs des Patentanspruchs 1 vorgesehen, dass der mindestens eine Überstand als getrennt von der ungeteilten oder geteilten Sitzbank ausgeführte Sitzteilseitenwange und Rückenlehnenseitenwange ausgebildet ist, wobei die jeweilige Seitenwange von einem benachbarten Sitzteil oder einer benachbarten Rückenlehne getrennt angeordnet und an dem Sitzbankuntergestell oder am Sitzuntergestell befestigt ist, sodass eine Flachfaltung der Sitzbank über einen sitzuntergestellfesten Klappmechanismus vor das Sitzbankuntergestell oder das Sitzuntergestell ohne Mitnahme der Seitenwange und eine Verschiebebewegung der ungeteilten oder geteilten Sitzbank in Fahrzeuglängsrichtung unter Mitnahme der Seitenwange ausführbar ist.

In vorteilhafter Weise ergeben sich somit eine Reihe von vorteilhaften Umgestaltungsmöglichkeiten der Sitzanlage.

Eine Umgestaltungsmöglichkeit besteht darin, dass die Seitenwangen der Sitzanlage bei der Verschiebebewegung der ungeteilten Sitzbank oder Teilen der geteilten Sitzbank mitgeführt werden. Bei der Verschiebebewegung besteht zunächst einmal keine Notwendigkeit die Seitenwangen von der Sitzbank zu trennen. Deshalb sind die Seitenwangen dem jeweiligen Sitzuntergestell der ungeteilten oder geteilten Sitzbank zugeordnet.

Die Separierung, das heißt die getrennte Anordnung der Seitenwangen von dem oder den benachbarten Sitzteil/en beziehungsweise von der oder den benachbarten Rückenlehne/n, ermöglicht eine weitere Umgestaltungsmöglichkeit, die in vorteilhafter Weise darin besteht, dass die Seitenwangen bei der Flachfaltung der ungeteilten Sitzbank oder der Flachfaltung von Teilen der geteilten Sitzbank stehen bleiben. Die Flachfaltung bewirkt ein Klappmechanismus, der an dem Sitzuntergestell ausgeführt ist, der unabhängig von den Seitenwangen arbeitet, sodass eine Flachfaltung, die in Fachkreisen in gängiger Sprechweise auch als "Fold-Flat"-Funktion bezeichnet wird, unabhängig von den Seitenwangen möglich ist.

In vorteilhafter Weise ist zudem vorgesehen, dass die Rückenlehnenseitenwangen gegenüber den Sitzteilseitenwangen im Zuge einer Rückenlehnenwangenklappung verschwenkbar sind. Hierdurch ist nicht nur durch die getrennte Anordnung der Seitenwangen die Verschiebebewegung unter Mitnahme der Seitenwangen und/oder die Flachfaltung ohne Mitnahme der Seitenwangen ausführbar, sondern es ergeben sich weitere Umgestaltungsmöglichkeiten.

In einer weiteren bevorzugten Umgestaltungsmöglichkeit ist durch die Verschiebebewegung und/oder die Flachfaltung der ungeteilten Sitzbank oder Teilen der geteilten Sitzbank ein vergrößerter Ladegutraum beziehungsweise eine Ladefläche ausbildbar, der/die durch eine Rückenlehnenwangenklappung weiter vergrößerbar ist.

Schließlich besteht eine weitere bevorzugte Umgestaltungsmöglichkeit darin, dass durch die Verschiebebewegung und die Flachfaltung der ungeteilten Sitzbank oder Teilen der geteilten Sitzbank gemeinsam mit einer teilweisen oder vollständigen Rückenlehnenklappung mindestens einer weiteren Sitzreihe eine Liegestatt ausbildbar ist, die durch eine Rückenlehnenwangenklappung vergrößerbar ist.

Die Erfindung wird nachfolgend in einem Ausführungsbeispiel anhand der zugehörigen Zeichnungen erläutert. Es zeigen:
- Figur 1A: eine Sitzanlage in einem bekannten Großraum-Fahrzeug in Grundposition in einer perspektivischen Darstellung;
- Figur 1B: die Sitzanlage in dem bekannten Großraum-Fahrzeug in einer Konferenzstellung in einer perspektivischen Darstellung
- Figur 1C: die Sitzanlage in dem bekannten Großraum-Fahrzeug in einer Liegestellung in einer perspektivischen Darstellung
- Figur 1D: die zweite und dritte Sitzreihe der Sitzanlage nach Figur 1A-1C in einer perspektivischen Darstellung im Zusammenhang mit einem Bodenschienensystem nach dem Stand der Technik;
- Figur 2: eine zweite und dritte Sitzreihe der Sitzanlage in einer schematischen Darstellung gemäß der Erfindung;
- Figur 3: eine schematische Darstellung einer Verschiebbarkeit der Sitzbank der dritten Sitzreihe oder Teilen davon;
- Figur 4A, 4B: eine schematische Darstellung einer Flachfaltung der Sitzbank der dritten Sitzreihe oder Sitzbankteilen davon und
- Figur 5A, 5B: eine schematische Darstellung einer Verschiebebewegung und einer Flachfaltung der Sitzbank der dritten Sitzreihe oder Sitzbankteilen davon und eine Klappung der Rückenlehnen der zweiten Sitzreihe sowie eine Rückenlehnenseitenwangenklappung der dritten Sitzreihe.

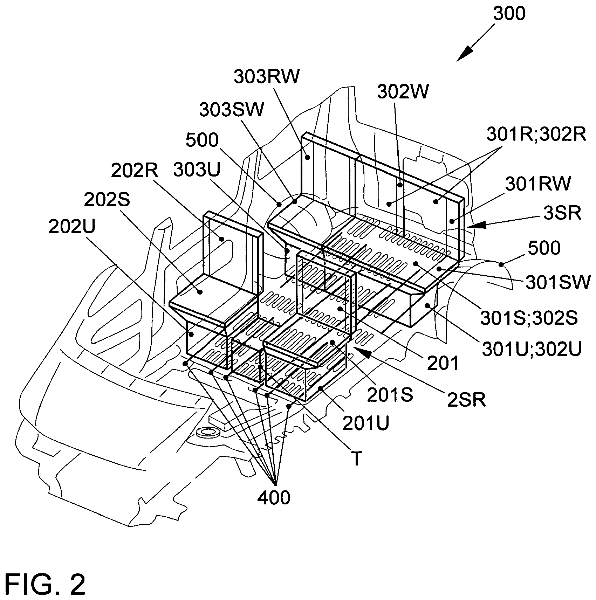

Auf die Figuren 1A bis 1D wurde bereits eingegangen. Die nachfolgende Beschreibung der Erfindung anhand der Figuren 2 bis 5B schließt sich an die Figuren 1A bis 1D an. Innerhalb aller Figuren werden die gleichen Bezugszeichen für gleiche Bauteile verwendet, wobei gegebenenfalls nicht in jeder Figur erneut alle bereits vorgestellten Bauteile anhand der Bezugszeichen nochmals erläutert werden. Mit Vorderseite werden unabhängig von der Position jeweils die Anlagenflächen der Sitzteile beziehungsweise Rückenlehnen in Normalposition der Sitzteile und Rückenlehnen bezeichnet. Als Rückseite wird die gegenüberliegende Seite bezeichnet. Die Stirnseite und die Unterseite ist jeweils die obere oder untere schmale Fläche zwischen Vorder- und Rückseite.

Figur 2 zeigt in einer schematischen Darstellung den bereits in den Figuren 1A bis 1D beschriebenen grundsätzlichen Aufbau der zweiten und dritten Sitzreihe 2SR, 3SR einer Sitzanlage. Die Erfindung wird anhand einer Sitzbank 300 beschrieben die ein 60 % Sitzbankteil 301, 302 und 40% Sitzbankteil 303 aufweist. Die nachfolgend beschriebene Lösung ist für ungeteilte Sitzbänke 300 beziehungsweise dreiteilige Sitzbänke 300 der dritten Sitzreihe 3SR, die drei separate Sitzbankteile 301, 302, 303 aufweist, gleichermaßen anwendbar. Jedem Sitzbankteil ist je nach Ausführung ihr eigenes Sitzuntergestell zugeordnet, das heißt eine ungeteilte Sitzbank 300 weist ein Sitzbankuntergestell 300U auf und eine wie in Figur 2 dargestellte geteilte Sitzbank 300 weist ein gemeinsames Sitzuntergestell 301U/302U für das 60 % Sitzbankteil 301, 302 und ein Sitzuntergestell 303U für das 40% Sitzbankteil 303 auf.

Eine wesentliche Besonderheit der Erfindung besteht darin, dass die in der Beschreibung zum Stand der Technik erwähnten Überstände links und rechts (von der Heckseite eines Fahrzeuges aus gesehen) oberhalb der Radhäuser 500 bei einer geteilten Sitzbank 300 als von dem 60% Sitzbankteil 301/302 und dem 40% Sitzbankteil 303 getrennte Seitenwangen 301SW, 301RW beziehungsweise 303SW, 303RW ausgebildet werden. Bei einer ungeteilten Sitzbank 300 sind analog Seitenwangen 300SW beziehungsweise 300RW ausgebildet.

Die Konturierung der Seitenwangen 301SW, 301RW beziehungsweise 303SW, 303RW ist so stark ausgeprägt, dass ein ausreichender Seitenhalt für die Passagiere gewährleistet ist, ohne das Armlehnen benötigt werden. Die Seitenwangen 301SW, 301RW beziehungsweise 303SW, 303RW sind stark konturiert, das heißt gegenüber der Anlagefläche der Sitzteile 301S, 303S beziehungsweise der Rückenlehne 301R, 303R stark erhaben ausgeführt.

Eine ungeteilte 100% Sitzbank 300 umfasst jeweils seitlich davon getrennt angeordnet eine (von der Heckseite eines Fahrzeuges aus gesehen) rechte Sitzteilseitenwange 303SW und eine rechte Rückenlehnenseitenwange 303RW sowie eine linke Sitzteilseitenwange 301SW und eine linke Rückenlehnenseitenwange 301RW. Die Sitzbank 300 im Ausführungsbeispiel umfasst das 60% Sitzbankteil 301/302 und das 40% Sitzbankteil 303 sowie die rechte Sitzteilseitenwange 303SW und die rechte Rückenlehnenseitenwange 303RW sowie die linke Sitzteilseitenwange 301SW und die linke Rückenlehnenseitenwange 301RW.

Durch diese Ausgestaltung der Sitzbank 300 der dritten Sitzreihe 3SR ergeben sich in vorteilhafter Weise eine Reihe von Möglichkeiten zur variablen Umgestaltung der Sitzbank 300, die nachfolgend beschrieben werden.

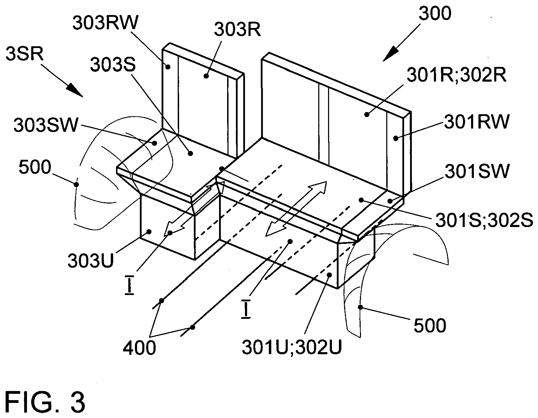

Wie Figur 3 in einer weiteren schematischen Darstellung zeigt, ist eine Verschiebbarkeit der Sitzbank 300 der dritten Sitzreihe 3SR beziehungsweise wie dargestellt des 40% Sitzbankteiles 303 oder des 60% Sitzbankteiles 301/302 möglich. Eine Verschiebebewegung I der Sitzbank 300 beziehungsweise der Sitzbankteile 303 oder 301/302 findet bei der Verschiebebewegung I gemeinsam mit den Seitenwangen 301SW, 301RW und 303SW, 303 RW statt.

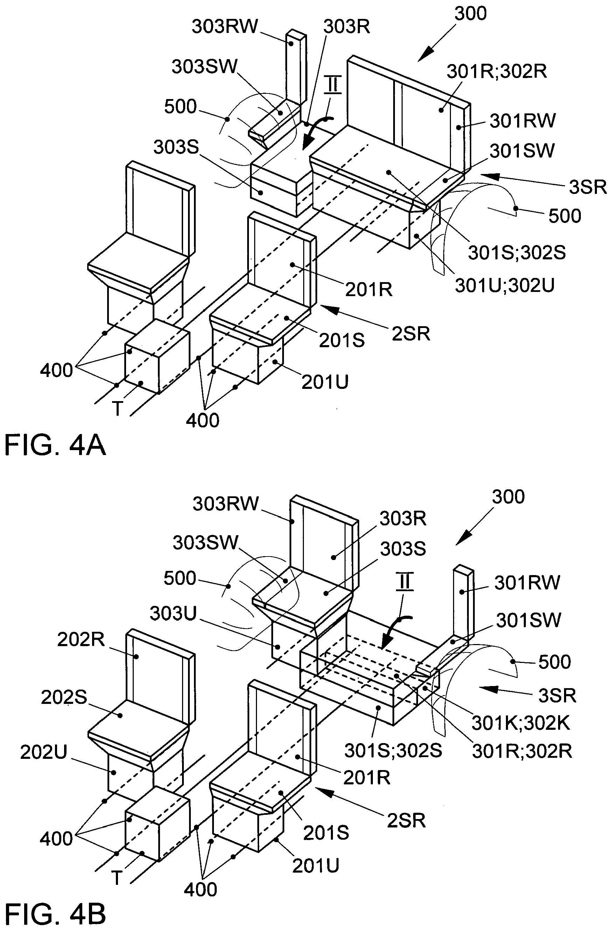

Die Seitenwangen 301SW, 301RW und 303SW, 303 sind separat an dem jeweiligen Sitzuntergestell 301U, 303U befestigt und nicht direkt mit dem benachbarten Sitzteil 301S, 303S beziehungsweise der benachbarten Rückenlehne 301R, 303R verbunden, sodass die Sitzbank 300 beziehungsweise die Sitzbankteile 303 oder 301/302 unabhängig von den Seitenwangen 301SW, 301RW und 303SW, 303RW zudem über einen jeweils angeordneten sitzuntergestellfesten Klappmechanismus (nur in Figur 4B andeutungsweise dargestellt) bewegt werden können, um die Sitzbank 300 beziehungsweise der Sitzbankteile 303 oder 301, 302 separat - also unabhängig von den Seitenwangen 301SW, 301RW und 303SW, 303RW - umgestalten zu können, wie die Figuren 4A, 4B in schematischen Darstellungen zeigen.

Die schematischen Darstellungen der Figuren 4A, 4B zeigen den Innenraum des Fahrzeuges in einer gestreckten Darstellung, das heißt der Abstand zwischen der zweiten Sitzreihe 2SR und der dritten Sitzreihe 3SR ist in Fahrtrichtung gesehen gestreckt dargestellt, damit die Umgestaltung - eine Flachfaltung II - des 40% Sitzbankteiles 303 (Figur 4A) und des 60% Sitzbankteiles 301/302 (Figur 4B) besser sichtbar ist.

Durch die Figuren wird verdeutlicht, dass die Flachfaltung II der Sitzbank 300 der dritten Sitzreihe 3SR oder des dargestellten 40% Sitzbankteiles 303 und/oder des 60% Sitzbankteiles 301, 302 möglich ist. Das jeweilige Sitzuntergestell 303U beziehungsweise 301U/302U, mit seinem Klappmechanismus 301K, 302K (nur für das 60% Sitzbankteil 301, 302 dargestellt) liegt in der flach gefalteten Position II gemeinsam mit dem Sitzteil 301S, 302S in der gleichen horizontalen Ebene. Das Sitzteil 301S, 302S wird auf einer Kreisbahn nach vorne und nach unten bewegt.

Das jeweilige Sitzuntergestell 303U und 301U/302U und der jeweils integrierte Klappmechanismus 301K, 302K liegen in der flach gefalteten Position II des 40% Sitzbankteiles 303 und/oder des 60% Sitzbankteiles 301, 302 entgegen der Fahrtrichtung gesehen hinter dem jeweiligen Sitzteil 303S und 301S/302S. Das Sitzuntergestell 303U und 301U/302U, in welches der Klappmechanismus integriert oder der als Klappmechanismus ausgebildet ist, baut in der gefalteten Position II der Sitzbankteile 303 und 301/302 in seiner Höhe nur gering aus.

Der scherenartige Klappmechanismus 301K, 302K sorgt dafür, dass das jeweilige Sitzteil 303S beziehungsweise das Sitzteil 301S/302S gemeinsam mit der jeweiligen Rückenlehne 303R beziehungsweise 301R/302R auf einer Kreisbahn nach vorne geschwenkt wird, sodass die beiden Stirnseiten der jeweiligen Sitzteile 303S sowie 301S/302S und der jeweiligen, insgesamt längeren, Rückenlehnen 303R und 301R/302R nach der Flachfaltung II in Richtung der zweiten Sitzreihe 2SR nicht nur verschwenkt sind, sondern darüber hinaus, dass die jeweiligen Stirnseiten im Wesentlichen einen stufenfreien Abschluss finden. Dabei schließen die Unterseiten der Rückenlehnen 303R beziehungsweise 301R/302R nach der Flachfaltung II bündig mit der Rückseite des benachbarten nicht flach gefalteten Sitzteiles ab.

Da die dargestellten Seitenwangen 301SW, 301RW und 303SW, 303RW im Wesentlichen die Breite der Radhäuser 500 aufweisen, kann das 40 % Sitzbankteil 303 und/oder das 60 % Sitzbankteil 301/302 ohne Weiteres direkt aus der Grundposition relativ zu den Radhäusern 500 neben den Radhäusern 500 geschwenkt und nach unten geführt werden und wie beschrieben problemlos flach gefaltet werden.

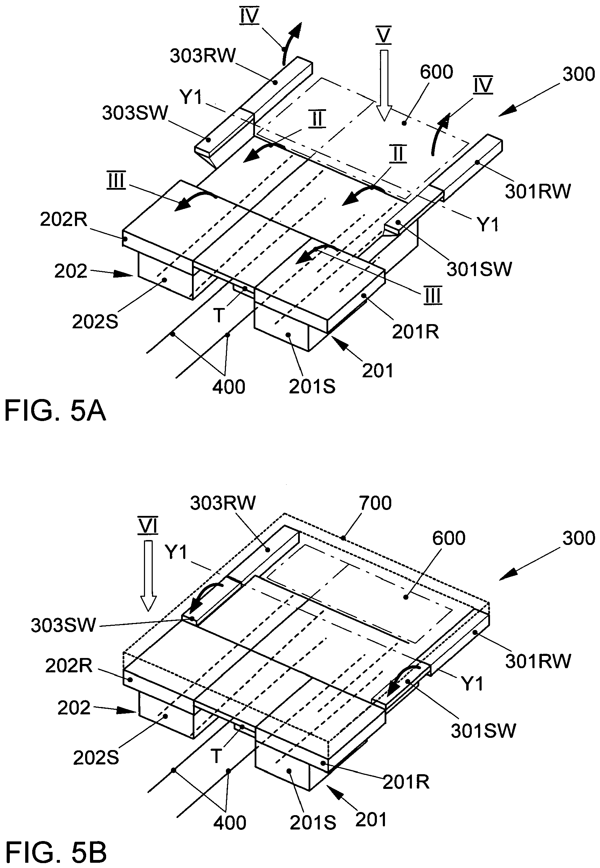

Die Figuren 5A, 5B zeigen den Innenraum des Fahrzeuges in einer weiteren schematischen Darstellung, wobei bereits eine Verschiebebewegung I und eine Flachfaltung der Sitzbank 300 der dritten Sitzreihe 3SR beziehungsweise der Sitzbankteile 303, 301/302 sowie eine Rückenlehnenklappung III der Rückenlehnen 201R, 202R der zweiten Sitzreihe 2SR und eine Seitenwangenklappung IV in der dritten Sitzreihe 3SR stattgefunden hat.

Die Figuren 5A, 5B werden gemeinsam erläutert, wobei nachfolgend auf die Vorgehensweise zur Umgestaltung der zweiten und dritten Sitzreihe 2SR, 3SR in eine 100% Liegestatt beziehungsweise in einen vergrößerten 100% Laderaum detailliert eingegangen wird, die wie in Figur 5A, 5B dargestellt über die gesamte Breite des Fahrgastraumes ausgebildet sind.

Als Ausgangspunkt für die Erläuterungen zur Umgestaltung des Innenraumes des Großraum-Fahrzeuges dient Figur 2.

In einem ersten Schritt, werden die Rückenlehnen 201R, 202R der zweiten Sitzreihe 2SR auf die zugehörigen Sitzteile 201S, 202S geklappt. Die Auflagefläche des Tisches T wird durch Umgestaltung des Tisches T so ausgestaltet, dass der Zwischenraum zwischen der Rückseite der Rückenlehnen 201R, 202R der Einzelsitze 201, 202 der zweiten Sitzreihe 2SR verschlossen ist, sodass eine ebene Fläche aus den Rückseiten der Rückenlehnen 201R, 202R und der Auflagefläche des Tisches T ausgebildet ist.

In einem zweiten Schritt wird, wie bereits im Zusammenhang mit der Figurenbeschreibung Figur 4A, Figur 4B erläutert, eine Flachfaltung II der Sitzbankteile 301/302 sowie 303 vorgenommen.

In einem dritten Schritt wird, wie bereits im Zusammenhang mit der Figurenbeschreibung Figur 3 beschrieben, eine Verschiebebewegung I der Sitzbankteile 301/302 und 303 der dritten Sitzreihe 3SR in Richtung der zweiten Sitzreihe 2SR vorgenommen, um eine gegebenenfalls verbleibende Lücke zwischen der Rückseite der zweiten Sitzreihe 2SR und der Stirnseite der flach gefalteten Sitzbankteile 301/302 sowie 303 zu schließen.

Es ist vorgesehen, dass die Verschiebebewegung I sowohl bei flach gefalteten Sitzbankteilen 301/302 sowie 303 als auch bei nicht flach gefalteten Sitzbankteilen 301, 302 sowie 303 durchführbar ist, sodass der dritte auch vor dem zweiten Schritt durchführbar ist.

In einem vierten Schritt werden die Rückenlehnenseitenwangen 301RW, 303RW im Zuge einer Rückenlehnenseitenwangenklappung IV nach hinten geklappt.

Die Klappung der Rückenlehnenseitenwangen 301RW, 303RW kann auch vorher erfolgen. Die Beschreibung erläutert den besten Weg zur Umgestaltung der Sitzanlage. Es versteht sich somit, dass die beschriebenen Schritte in unterschiedlicher Reihenfolge stattfinden können, da alle beschriebenen kinematischen Bewegungen der beschriebenen Teile der Sitzanlage unabhängig voneinander ausführbar sind.

In vorteilhafter Weise ist der Innenraum des Fahrzeuges, wie Figur 5A, 5B verdeutlicht, wesentlich vergrößert, sodass ein vergrößertes Ladevolumen zur Verfügung steht. Eine 40 % oder 60 % Liegestatt beziehungsweise ein um 40% oder 60% vergrößerter Laderaum ist ebenfalls ausbildbar, wenn die beschriebenen einzelnen Schritte nur mit den rechten 40%-Teilen 303, 303RW sowie 203 beziehungsweise mit den linken 60%-Teilen 301/302, 301RW sowie 201 und dem Tisch T der Sitzanlage durchgeführt werden.

Zur Komforterhöhung wird zudem als fünfter Schritt vorgeschlagen, zwischen den beiden nach hinten geklappten Rückenlehnenseitenwangen 301RW, 303RW in einem Einlegevorgang V ein Einlegeelement, in der Art eines Zwischenbodens 600, anzuordnen, wobei die entsprechenden Auflager, insofern der Zwischenboden 600 über die gesamte Breite des Fahrgastraumes einteilig ausgeführt ist, an den Rückenlehnenseitenwangen 301RW, 303RW, insbesondere an der Rückseite der Rückenlehnenseitenwangen 301RW, 303RW angeordnet werden können. Durch den Zwischenboden 600 ergibt sich zudem ein Stauraum oberhalb des Bodenaufbaus und unterhalb des Zwischenbodens 600, der bei der Ausbildung der Sitzanlage als Liegestatt zeitweise zur Unterbringung von Gegenständen genutzt werden kann.

Zur weiteren Komforterhöhung wird ferner in einem sechsten Schritt vorgeschlagen, gemäß Figur 5A, auf der vorbereiteten im Wesentlichen ebenen Fläche der beispielhaft dargestellten 100% Liegestatt in einem Auflegevorgang VI ein zusätzliches Auflageelement 700, in der Art einer Matratze oder dergleichen, anzuordnen, wobei die Rückseiten der Einzelsitze 201, 202 der zweiten Sitzreihe 2SR, die Auflagefläche des Tisches T, die Rückseiten der Rückenlehnen 303R sowie 301R/302R der Sitzbankteile 303, 301/302 und die Oberseite des Zwischenbodens 600 sowie die Oberseiten der Seiten- und Rückenlehnenseitenwangen 301SW, 301RW und 303SW, 303RW eine Auflagefläche für das Auflageelement 700 bilden.

Das Einlegeelement 600 und das Auflageelement 700 können in entsprechend handlicher und im Kofferraum verstaubarer Form im Fahrzeug mitgeführt werden.

### Bezugszeichenliste

- 1SR: erste Sitzreihe
- 101: Einzelsitz
- 102: Einzelsitz
- 2SR: zweite Sitzreihe
- 201: Einzelsitz
- 202: Einzelsitz
- 3SR: dritte Sitzreihe
- 300: Sitzbank
- 301: Sitzbankteil
- 302: Sitzbankteil
- 301/302: Sitzbankteil (60%)
- 303: Sitzbankteil (40%)
- R: Rückenlehne
- S: Sitzteil
- _ _ _U: Sitzuntergestell/Sitzbankuntergestell
- _ _ _RW: Rückenlehnenseitenwange
- _ _ _SW: Sitzteilseitenwange
- _ _ _K: Klappmechanismus
- 400: Sitzschienen
- 500: Radhaus
- 600: Einlegeelement/Zwischenboden
- 700: Auflageelement
- I: Verschiebebewegung
- II: Flachfaltung
- III: Rückenlehnenklappung
- IV: Rückenlehnenwangenklappung
- V: Einlegevorgang
- VI: Auflegevorgang
- Y1: Schwenkachse
- T: Tisch

## Patentansprüche

1. Sitzanlage für ein Fahrzeug, mit einer in Fahrzeuglängsrichtung verschiebbaren ungeteilten oder geteilten Sitzbank (300; 301, 302, 303) in mindestens einer der Sitzreihen (1SR, 2SR, 3SR) des Fahrzeuges, deren Sitzbankuntergestell (300U) oder deren Sitzuntergestelle (301U, 302U, 303U) von mindestens einem seitlich der Sitzbank (300; 301, 302, 303) liegenden, den Bauraum für das Sitzbankuntergestell (300U) oder die Sitzuntergestelle (301U, 302U, 303U) begrenzenden Hindernisses (500) eingeengt wird/werden, weshalb die ungeteilte oder geteilte Sitzbank (300; 301, 302, 303) mindestens einen oberhalb des Hindernisses (500) liegenden Überstand bildet, **dadurch gekennzeichnet, dass**
- der mindestens eine Überstand als getrennt von der ungeteilten oder geteilten Sitzbank (300; 301, 302, 303) ausgeführte Sitzteilseitenwange (SW) und Rückenlehnenseitenwange (RW) ausgebildet ist,
- wobei die jeweilige Seitenwange (SW; RW) von einem benachbarten Sitzteil (301S, 302S; 303R) oder einer benachbarten Rückenlehne (301R, 302R; 303R) getrennt angeordnet und an dem Sitzbankuntergestell (300U) oder am Sitzuntergestell (301U; 302U, 303U) befestigt ist,
- sodass eine Flachfaltung (II) der Sitzbank (300; 301, 302, 303) über einen sitzuntergestellfesten Klappmechanismus vor das Sitzbankuntergestell (300U) oder das Sitzuntergestell (301U, 302U, 303U) ohne Mitnahme der Seitenwange (SW; RW) und
- eine Verschiebebewegung (I) der ungeteilten oder geteilten Sitzbank (300; 301, 302, 303) in Fahrzeuglängsrichtung unter Mitnahme der Seitenwange (SW; RW) ausführbar ist.

2. Sitzanlage nach Anspruch 1, **dadurch gekennzeichnet, dass** die Rückenlehnenseitenwangen (RW; 300RW, 301RW, 303RW) gegenüber den Sitzteilseitenwangen (SW; 300SW, 301SW, 303SW) im Zuge einer Rückenlehnenwangenklappung (IV) um eine Schwenkachse (Y1) verschwenkbar sind.

3. Sitzanlage nach Anspruch 1 und 2, **dadurch gekennzeichnet, dass** die Rückenlehnenwangenklappung (IV) nach der Verschiebebewegung (I) und/oder der Flachfaltung (II) ausführbar ist.

4. Sitzanlage nach Anspruch 1, **dadurch gekennzeichnet, dass** Rückenlehnenseitenwangen (RW; 300RW; 301RW, 303RW) mit den Sitzteilseitenwangen (SW; 300SW, 301SW, 303SW) drehbar in Verbindung stehen, wobei die Sitzteilseitenwangen (SW; 300SW, 301SW, 303SW) an dem Sitzbankuntergestell (300U) der ungeteilten Sitzbank (300) oder einem Sitzuntergestell (301U, 303U) der geteilten Sitzbank (301, 302, 303) angebracht sind.

5. Sitzanlage nach Anspruch 1 und 2, **dadurch gekennzeichnet, dass** durch die Verschiebebewegung (I) und/oder Flachfaltung (II) der ungeteilten Sitzbank (300) oder Teilen der geteilten Sitzbank (301, 302, 303) ein vergrößerter Ladegutraum beziehungsweise eine Ladefläche ausbildbar ist, der/die durch eine Rückenlehnenwangenklappung (IV) weiter vergrößerbar ist.

6. Sitzanlage nach Anspruch 1 und 2, **dadurch gekennzeichnet, dass** durch die Verschiebebewegung (I) und Flachfaltung (II) der ungeteilten Sitzbank (300) oder Teilen der geteilten Sitzbank (301, 302, 303) gemeinsam mit einer teilweisen oder vollständigen Rückenlehnenklappung (III) mindestens einer weiteren Sitzreihe (2SR) eine Liegestatt ausbildbar ist, die durch eine Rückenlehnenwangenklappung (IV) vergrößerbar ist.

7. Sitzanlage nach Anspruch 1, **dadurch gekennzeichnet, dass** die den Bauraum für das Sitzbankuntergestell (300U) oder die Sitzuntergestelle (301U, 302U, 303U) begrenzenden beziehungsweise einengenden Hindernisse (500) in den Fahrgastraum des Fahrzeuges hinein stehende Radhäuser einer Karosserie des Fahrzeuges sind.

## Claims

1. Seat system for a vehicle, with an undivided or divided seat bench (300; 301, 302, 303), which is displaceable in the longitudinal direction of the vehicle, in at least one of the seat rows (1SR, 2SR, 3SR) of the vehicle, the seat bench underframe (300U) of which or the seat underframes (301U, 302U, 303U) of which is/are constricted by at least one obstacle (500) lying to the side of the seat bench (300; 301, 302, 303) and limiting the construction space for the seat bench underframe (300U) or the seat underframes (301U, 302U, 303U), for which reason the undivided or divided seat bench (300; 301, 302, 303) forms at least one projection lying above the obstacle (500), **characterized in that**
- the at least one projection is designed as a seat part side face (SW) and backrest side face (RW) formed separately from the undivided or divided seat bench (300; 301, 302, 303),
- wherein the respective side face (SW; RW) is arranged separately from an adjacent seat part (301S, 302S; 303R) or an adjacent backrest (301R, 302R; 303R) and is fastened to the seat bench underframe (300U) or to the seat underframe (301U; 302U, 303U),
- and therefore folding flat (II) of the seat bench (300; 301, 302, 303) can be carried out via a seat-underframe-mounted folding mechanism in front of the seat bench underframe (300U) or the seat underframe (301U, 302U, 303U) without carrying along the side face (SW; RW), and
- a displacement movement (I) of the undivided or divided seat bench (300; 301, 302, 303) in the longitudinal direction of the vehicle can be carried out with the side face (SW; RW) being carried along.

2. Seat system according to Claim 1, **characterized in that** the backrest side faces (RW; 300RW, 301RW, 303RW) are pivotable in relation to the seat part side faces (SW; 300SW, 301SW, 303SW) over the course of a backrest face folding (IV) about a pivot axis (Y1).

3. Seat system according to Claims 1 and 2, **characterized in that** the backrest face folding (IV) can be carried out after the displacement movement (I) and/or the folding flat (II).

4. Seat system according to Claim 1, **characterized in that** backrest side faces (RW; 300RW; 301RW, 303RW) are rotatably connected to the seat part side faces (SW; 300SW, 301SW, 303SW), wherein the seat part side faces (SW; 300SW, 301SW, 303SW) are attached to the seat bench underframe (300U) of the undivided seat bench (300) or to a seat underframe (301U, 303U) of the divided seat bench (301, 302, 303).

5. Seat system according to Claims 1 and 2, **characterized in that** the displacement movement (I) and/or folding flat (II) of the undivided seat bench (300) or parts of the divided seat bench (301, 302, 303) make it possible to form an enlarged cargo compartment or a loading surface, which can be enlarged further by a backrest face folding (IV).

6. Seat system according to Claims 1 and 2, **characterized in that** the displacement movement (I) and folding flat (II) of the undivided seat bench (300) or parts of the divided seat bench (301, 302, 303) together with a partial or complete backrest folding (III) of at least one further seat row (2SR) makes it possible to form a bed which can be enlarged by a backrest face folding (IV).

7. Seat system according to Claim 1, **characterized in that** the obstacles (500) limiting or constricting the construction space for the seat bench underframe (300U) or the seat underframes (301U, 302U, 303U) are vehicle body wheel houses protruding into the passenger compartment of the vehicle.

## Revendications

1. Installation de siège pour un véhicule, comprenant une banquette de siège (300 ; 301, 302, 303) divisée ou non divisée, déplaçable dans la direction longitudinale du véhicule, dans au moins l'une des rangées de sièges (1SR, 2SR, 3SR) du véhicule, dont le châssis de banquette de siège (300U) ou le châssis de siège (301U, 302U, 303U) est/sont restreint(s) par au moins un obstacle (500) situé latéralement par rapport à la banquette de siège (300 ; 301, 302, 303), limitant l'espace pour le châssis de banquette de siège (300U) ou le châssis de siège (301U, 302U, 303U), ce pourquoi la banquette de siège (300 ; 301, 302, 303) divisée ou non divisée forme au moins un dépassement situé au-dessus de l'obstacle (500), **caractérisée en ce que**
- l'au moins un dépassement est réalisé sous forme de joue latérale de partie de siège (SW) et de joue latérale de dossier (RW) séparément de la banquette de siège (300 ; 301, 302, 303) divisée ou non divisée,
- la joue latérale respective (SW ; RW) étant disposée de manière séparée d'une partie de siège adjacente (301S, 302S ; 303R) ou d'un dossier adjacent (301R, 302R ; 303R) et étant fixée au châssis de banquette de siège (300U) ou au châssis de siège (301U ; 302U, 303U),
- de sorte qu'un repliement à plat (II) de la banquette de siège (300 ; 301, 302, 303) puisse être réalisé par le biais d'un mécanisme de rabattement fixé au châssis de siège devant le châssis de banquette de siège (300U) ou le châssis de siège (301U, 302U, 303U), sans entraînement de la joue latérale (SW ; RW) et
- qu'un déplacement de coulissement (I) de la banquette de siège (300 ; 301, 302, 303) divisée ou non divisée dans la direction longitudinale du véhicule puisse être effectué avec entraînement de la joue latérale (SW ; RW) .

2. Installation de siège selon la revendication 1, **caractérisée en ce que** les joues latérales de dossier (RW ; 300RW, 301RW, 303RW) peuvent pivoter autour d'un axe de pivotement (Y1) par rapport aux joues latérales de partie de siège (SW ; 300SW, 301SW, 303SW) au cours d'un rabattement des joues de dossier (IV).

3. Installation de siège selon les revendications 1 et 2, **caractérisée en ce que** le rabattement des joues de dossier (IV) peut être réalisé après le déplacement de coulissement (I) et/ou le repliement à plat (II).

4. Installation de siège selon la revendication 1, **caractérisée en ce que** les joues latérales de dossier (RW ; 300RW, 301RW, 303RW) sont en liaison de rotation avec les joues latérales de partie de siège (SW ; 300SW, 301SW, 303SW), les joues latérales de partie de siège (SW ; 300SW, 301SW, 303SW) étant montées sur le châssis de banquette de siège (300U) de la banquette de siège (300) non divisée ou sur un châssis de siège (301U, 303U) de la banquette de siège (301, 302, 303) divisée.

5. Installation de siège selon les revendications 1 et 2, **caractérisée en ce que** par le déplacement de coulissement (I) et/ou le repliement à plat (II) de la banquette de siège (300) non divisée ou de parties de la banquette de siège (301, 302, 303) divisée, un espace de chargement plus important ou une surface de chargement peuvent être réalisés, lequel/laquelle peut être encore agrandi(e) par un rabattement de la joue de dossier (IV).

6. Installation de siège selon les revendications 1 et 2, **caractérisée en ce que** par le déplacement de coulissement (I) et/ou le repliement à plat (II) de la banquette de siège (300) non divisée ou de parties de la banquette de siège (301, 302, 303) divisée conjointement avec un rabattement partiel ou complet du dossier (III) d'au moins une rangée de sièges supplémentaire (2SR), une couchette peut être réalisée, laquelle peut être agrandie par un rabattement de la joue de dossier (IV).

7. Installation de siège selon la revendication 1, **caractérisée en ce que** les obstacles (500) limitant ou restreignant l'espace de construction pour le châssis de banquette de siège (300U) ou les châssis de sièges (301U, 302U, 303U) sont des passages de roue d'une carrosserie du véhicule, disposés à l'intérieur de l'habitacle de conduite du véhicule.
